# EUROPEAN PATENT SPECIFICATION

(11) **EP 2 857 675 B1**
(45) Date of publication and mention of the grant of the patent: **30.11.2016**
(21) Application number: 13187530.4
(22) Date of filing: 07.10.2013
(51) Int. Cl.: F03D 1/00

(54) **Shaping a curved rotor blade**
Formen eines gekrümmten Rotorblatts
Formage de pale de rotor incurvée

(43) Date of publication of application: 08.04.2015
(73) Proprietor: Siemens Aktiengesellschaft, 80333 München (DE)
(72) Inventor: Enevoldsen, Peder Bay, 7100 Vejle (DK)

(56) References cited:
- EP-B1- 1 644 271
- GB-A- 2 485 595

## Description

The present invention concerns a method of shaping a curved rotor blade, in particular a rotor blade of a wind turbine, for storage and/or transport such that an overall cross-extension of the rotor blade is reduced in at least one direction perpendicular to a longitudinal principal (i.e. overall) extension of the rotor blade. The invention also concerns a shaping tool for that purpose and the use of such shaping tool.

Horizontal axis wind turbines with a rotor on their upwind side have become (apart from a few exceptions) the standard in the wind turbine industry. Thereby, a nacelle is aligned essentially horizontally on top of a wind turbine tower. To the nacelle, there is rotatably connected a rotor with a number of rotor blades which rotor blades are aligned essentially vertically so that the rotational axis of the rotor is essentially horizontal.

The rotor blades of such wind turbines are increased in length in order to increase the amount of extractable energy from the wind and to realize wind turbines with higher nominal power outputs. State of the art wind turbine rotor blades have a longitudinal extension of up to 80 metres, but this does not yet constitute the limit of that development of ever-increasing rotor blade lengths. Rotor blades of such length exhibit a relatively low stiffness in a flapwise direction, i.e. in the direction from the suction side to the pressure side of the rotor blade in an assembled state of a horizontal axis wind turbine. Such rotor blades are often made of fibre composite material (comprising for instance glass and/or carbon fibres) which is relatively flexible and thus can be bent without losing their original form and shape.

Rotor blades are exposed to large forces and loads which cause a bending of the rotor blades and a deflection of the tips of the blades towards downwind, i.e. towards the towers of the wind turbines. A critical design parameter for wind turbines is to prevent its rotor blades from hitting the towers of the wind turbines during operation. In one approach to this problem, GB 2485595 A describes a sensor mounted in a conventionally shaped blade to detect a distortion of the blade during operation of the wind turbine, and a tensioner is used to adjust the tension of a cable installed along the length of the blade. In this way, the blade stiffness can be adjusted to prevent the blade tip from striking the tower.

Several design measures are common in practice in the industry to realize a sufficient clearance of several metres between the tower of a wind turbine and a tip of a rotor blade during the wind turbine's operation under all circumstances, one of which is pre-bending the rotor blades (slightly) upwind, which means that the pressure side of the rotor blade in the region close to the tip of the rotor blade is pre-bent towards the wind, i.e. away from the tower. The region close to the tip of the rotor blade comprises the thinnest region of the rotor blade which is thus most flexible and easy to bend so that the pre-bent rotor blade bends further downwind when subjected to wind flow. Therefore, such pre-bend of the rotor blade serves to equalize the bending behaviour of the rotor blade under wind turbine operation.

A pre-bend generally comprises an integral shape of the rotor blade which is such that it shapes the rotor blade away from a purely linear longitudinal extension. Thereby, one can distinguish between the sweep of the blade (which is a shape away from the purely linear longitudinal extension of the rotor blade essentially along the rotational movement plane of the rotor) and an upwind/downwind pre-bend which is essentially perpendicular to the sweep.

Whilst pre-bending rotor blade has a great advantage during operation of the wind turbine, transport and storage of such pre-bent rotor blades is getting increasingly complicated: the stronger the bend, the more space is needed for the rotor blade during storage and/or transport. For instance, if the rotor blade is stored such that the pre-bend mainly extends upwards or downwards, a storage container or a vehicle with the rotor blade on it automatically gets higher the stronger the rotor blade is pre-bent (given the same longitudinal extension of the rotor blade). This may for instance result in a rotor blade the tip of which is several metres above ground when stored or transported. This constitutes severe problems, in particular during transport - for instance such vehicles cannot pass under bridges any more. Similarly, if the pre-bend mainly extends sidewards, narrow sections on streets or curvatures cannot be passed by such vehicle any more.

European patent EP 1 644 271 B1 describes that problem in more detail and also provides one solution for the problem, namely that of straightening and prestressing such rotor blades during storage and/or transport by means of a tensioning device.

It is an object of the present invention to provide an alternative possibility of shaping a curved rotor blade for storage and/or transport, which alternative is preferably more convenient in use and/or safer to apply and/or gives the possibility to further reduce storage and/or transport space of the rotor blade.

This object is met by the method according to claim 1 and by the shaping tool according to claim 10.

Thus, the method outlined in the introductory paragraph comprising according to the invention the step of introducing a shaping tool into an interior of the rotor blade, which shaping tool is preferably stiffer than the rotor blade at least in a direction defined by the cross-extension in the at least one direction. Alternatively, the shaping tool may also be as stiff as or even less stiff than as the rotor blade in that cross-extensional direction but have a strong bend in that direction as a countershape of the pre-bend of the rotor blade.

The term "overall cross-extension" of the rotor blade thereby refers to the extension of the rotor blade perpendicular to its principal longitudinal extension - i.e. its maximum length along a horizontal line from its root to a projection of its tip when the rotor blade is aligned such that it rests on the horizontal line at its tip and the tip projects exactly upwards due to the pre-bend - from that point of the rotor blade which is farthest away from the horizontal line in the shortest distance to the horizontal line.

Therefore, the method comprises the supply of such curved, i.e. pre-bent rotor blade in the introduction of such shaping tool - also called a brace - into the interior of the curved rotor blade. The shape and preferably stiffness of the shaping tool serves to keep the rotor blade in a shape which resembles that of the shaping tool rather than in the original (untensioned) pre-bent shape. By designing the shape and stiffness of the shaping tool such that upon introduction of the shaping tool in a designated introduction direction the shape of the shaping tool counteracts against the pre-bend of the rotor blade, that pre-bend can be reduced and thus the overall dimensions of the rotor blade can also be reduced.

In contrast to the above-mentioned state of the art, a shaping force, i.e. a tension, against the pre-bent shape of the rotor blade is thus applied to the rotor blade from the interior, i.e. the inside of the (essentially hollow) rotor blade, rather than from the outside. There from results a reduction of the danger of damages to the outside surface of the rotor blade. Further, less overall space is necessary for maintaining the (reduced) shape, i.e. reduced curvature, of the rotor blade in comparison with the above-mentioned state of the art: as no devices for maintaining the desired tension of the rotor blade need to be applied at the outside of the rotor blade, space is automatically saved. Additionally, a shaping tool at the interior of the rotor blade can maintain a more constant force on the rotor blade during transport as forces resulting from vibrations during transport are dampened by the rotor blade itself when transferred to the shaping tools, namely forces which would be transferred to an outside tensioning device much more directly and less dampened. Storage and more particularly transport of the rotor blade is therefore easier, less risky for the transport good, i.e. the rotor blade, more space saving than in the above-mentioned prior art.

The invention also concerns a shaping tool for introduction into an interior of a curved rotor blade, preferably a curved rotor blade of a wind turbine, for storage and/or transport of the rotor blade, which shaping tool is preferably stiffer than the rotor blade at least in a direction defined by a cross-extension in at least one direction perpendicular to a longitudinal principal axis of the rotor blade. Thereby, the shaping tool is realized such that it can be positioned in the interior of the rotor blade such that it firmly holds the rotor blade during storage and/or transport in a way that a reduced cross-extension of the rotor blade in the at least one direction is maintained, which reduced cross-extension refers to a stressed (tensioned) state of the blade in comparison with its unstressed (untensioned) state.

The unstressed or untensioned state is such state in which only gravity forces are applied to the rotor blade. The shaping tool according to the invention can be used in the context of the method according to the invention.

The invention also concerns a blade assembly comprising a rotor blade with a shaping tool according to the invention introduced in the interior of the rotor blade.

The invention further concerns the use of a shaping tool according to the invention for introduction into an interior of a rotor blade, in particular in the context of the method according to the invention.

Particularly advantageous embodiments and features of the invention are given by the dependent claims, as revealed in the following description. Features of different claim categories may be combined as appropriate to give further embodiments not described herein.

According to a first embodiment, first the cross-extension of the rotor blade in the at least one direction is reduced by means of a tensioning device which is applied to the rotor blade's outer surface and second the shaping tool is introduced. This implies that a step-by-step process is performed, whereby before the introduction of the shaping tool the rotor blade is tensioned to reduce the above-named cross-extension (at least partially) and then the shaping tool is introduced into the interior of the rotor blade. After the introduction of the shaping tool the rotor blade can be released from the tensioning device again.

That means that during the introduction of the shaping tool into the interior of the rotor blade less friction forces (which might potentially damage an interior surface of the rotor blade along which the shaping tool is guided) need to be overcome. That way, the introduction of the shaping tool can be smoother and overall easier, in particular with less force being applied to introduce the shaping tool into the interior of the rotor blade.

According to a second embodiment, which can be used as an alternative to the first embodiment or as an add-on, the introduction of the shaping tool is used to reduce the cross-extension in the at least one direction. That means that the shaping tool does not only serve to hold the rotor blade in its reduced cross-extensional state but also to achieve that state. This second embodiment has the potential that less or even no tension forces need to be applied from outside to the rotor blade but that the tension forces can be exclusively or non-exclusively exerted by the shaping tool itself. This also implies that it is not compulsory to use (and thus to provide) a tool at the outside of the rotor blade for tensioning the rotor blade.

It is further preferred that the shaping tool is positioned inside the rotor blade such that it firmly holds the rotor blade such that the reduced cross-extension of the rotor blade is maintained by the shaping tool. In other words, the shaping tool is kept inside the rotor blade, preferably permanently all during the intended storage and/or transport, to maintain the desired (cross-extensionally) reduced outer shape of the rotor blade.

Preferably, the shaping tool is fixedly positioned in the interior of the rotor blade for storage and/or transport of the rotor blade, i.e. preferably permanently during the storage and/or transport. This can be accomplished for instance by a secured or locked connection of the shaping tool and the rotor blade, e.g. by means of a number of screws and/or bolts and/or safety pins or the like. Such fixation has the effect that the storage, and even more so the transport, can be safer as the shaping tool is prevented from accidentally getting loose and possibly changing its position within the interior of the rotor blade. Such fixed positioning may be released after the storage and/or transport so that the shaping tool can again be extracted from the interior of the rotor blade - which is preferred because in wind turbine operation the pretension caused by the shaping tool is often undesired.

In this context, the rotor blade may be equipped with engagement means - preferably at its interior -, such as with a number of recesses, at an interior surface. Other such engagement means (also considered to be receiving means) comprise holes and/or shafts or the like. The engagement means are realized to engage with correspondingly shaped and/or positioned counter-engagement means of the shaping tool such as protruding elements which fit into the recesses. Other engagement means combined with corresponding (possibly other) suitable counter-engagement means are possible, for instance a combination of rings and hangers or the like. Such combination of engagement means and counter-engagement means of the shaping tool and rotor blade provides for a particularly easy possibility of fixing the shaping tool inside the rotor blade.

It is further preferred that the introduction of the shaping tool is assisted by means of at least one guidance means. Such guidance means serve to safely guide the shaping tool on its way into its designated position in the interior of the rotor blade. The guidance means may for instance comprise a spar in the interior of the rotor blade. Such spars often exist anyway in the interior of rotor blades and may be used to assist the desired orientation of the shaping tool inside the rotor blade as a kind of guidance or reference structure. Other possibilities of guidance means comprise such guidance means comprising at least one guidance roller and/or at least one damper realized to dampen an impact (and/or a collision) of the shaping tool on the interior surface of the rotor blade and/or vice versa. Guidance rollers can serve to reduce the friction between the shaping tool and the interior surface of the rotor blade during the introduction of the shaping tool; dampers may reduce other forces between the shaping tool and the interior surface of the rotor blade, thus reducing the danger of oscillations during the introduction process or generally the danger of structural damages to the rotor blade. Any such guidance means may be comprised by the rotor blade, i.e. by its interior surface, and/or by the shaping tool, which latter is often preferred. They may however also be designed as extra parts not comprised by either the rotor blade or the shaping tool and introduced separately from and/or together with the shaping tool into the interior of the rotor blade.

The shaping tool according to the invention preferably comprises a core structure comprising a composite fibre material and/or carbon and/or steel. Such core structure consitutes the supporting structure of the shaping tool, preferably an inner supporting structure which is possibly, but not necessarily, covered with an outer surface. That means that the integral outer surface of the core structure may also constitute at least partially the outer surface of the shaping tool. All the above-mentioned preferred materials of the core structure have proven to be stiff enough in the context of the invention. They may be the sole constituent materials of the core structure or intercombined freely and/or combined with other materials, in particular other materials with a similar stiffness, i.e. a stiffness according to the above-mentioned criterion of stiffness of the shaping with respect to the stiffness of the rotor blade.

Further, the shaping tool may favourably comprise an outer surface which is at least partially comprised of a low friction material, preferably a nylon material, i.e. a material comprising nylon. Such low friction surface can serve to reduce frictions between the shaping tool and the interior surface of the rotor blade during the introduction process of the shaping tool.

The outer shape (i.e. surface) of the shaping tool preferably corresponds with the interior surface of the rotor blade. That means that both these surfaces correspond in shape so that the outer surface of the shaping tool is designed as a counter-shape of the interior surface of the rotor blade. This may be realized by local contact points, but preferably both surfaces are aligned with respect to each other along larger contact surfaces of a substantial extension in at least two directions. That means that areas rather than points of the two surfaces are contacted when the shaping tool is in its designated position within the interior of the rotor blade.

The shaping tool can be realized as a one-part tool with fixed overall dimensions, i.e. extensions. According to a preferred embodiment, the shaping tool is realized as an extendable shaping tool which is extendable in at least one direction, preferably a designated direction of introduction of the shaping tool into the interior of the rotor blade. In other words, the shaping tool can be adjusted in shape and thus indirectly its designated position in the interior of the rotor blade can be adjusted as well.

This can for instance be realized by the shaping tool comprising several parts. Such parts can be moved relative to one another or also be exchanged. For instance, such shaping tool may comprise a root part and two outer part, whereby the first outer part is longer than the second outer part. By exchanging the first outer part for the second outer part or vice versa, a reduction or increase of the overall length of the shaping tool can be realized. Generally, such extendable shaping tool can be adapted in length (and/or width, i.e. diameter) to the extension of the interior of the rotor blade before and/or during the introduction of the shaping tool, for instance after the shaping tool has been introduced into the interior such that the shaping tool fully fits into the interior along a desired extension and/or shape. This can serve to make the introduction process easier and/or smoother, but also to adapt such shaping tool to different interior surfaces of rotor blades, e.g. of different types (in particular sizes and/or shapes) of rotor blades.

For instance in this context, but also generally, it is preferred that the shaping tool comprises at least one actuator realized to extend the shaping tool as described above and/or to assist its introduction into the interior of the rotor blade. Such actuator may for instance comprise an electric motor and/or a hydraulic (and/or pneumatic) actuator. Such actuator can be used for the extension of the shaping tool but also to drive the shaping tool into the interior of the rotor blade. It can thus supply a force inside the rotor blade which drives the shaping tool further inside.

In the context of the invention, all kinds of shapes of shaping tools can be used principally, for instance such shaping tools which do not just extend within the interior of the rotor blade when placed in their designated position therein. That implies that parts of the shaping tool protrude from the interior of the rotor blade to the outside, for instance in order to supply a fixing possibility of the shaping tool to the rotor blade at the rotor blade's outer surface and/or to connect with storage and/or transport means used for storage and/or transport of the rotor blade. It is preferred that the shaping tool is realized such that it completely fits into the interior of the rotor blade. That means that no regions of shaping tool extend to the outside of the rotor blade when the shaping tool has been fully introduced into its designated position in the interior of the rotor blade. This has the effect that no extra space outside the rotor blade is needed for the shaping tool and that the shaping tool does not stand in the way of any operations during storage and/or transport of the rotor blade.

Other objects and features of the present invention will become apparent from the following detailed descriptions considered in conjunction with the accompanying drawings. It is to be understood, however, that the drawings are designed solely for the purposes of illustration and not as a definition of the limits of the invention. They are not necessarily drawn to scale.
Fig. 1 shows a side view of a shaping tool according to a first embodiment of the invention,
Fig. 2 shows a side view of a rotor blade which is to be shaped by means of a method according to an embodiment of the invention,
Fig. 3 shows the same rotor blade as in Fig. 2 equipped with the shaping tool shown in Fig. 1,
Fig. 4 shows a cross-sectional view along a line IV - IV of Fig. 3,
Fig. 5 shows a side view of a shaping tool according to a second embodiment of the invention,
Fig. 6 shows a side view of a shaping tool according to a third embodiment of the invention,
Fig. 7 shows a schematic block diagram of steps of a method according to an embodiment of the invention.

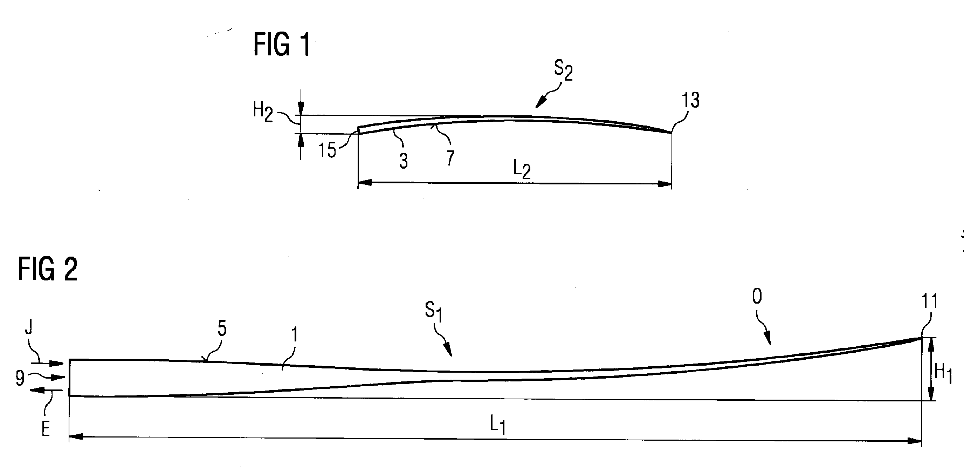

Fig. 1 shows a side view of a shaping tool 3 according to a first embodiment of the invention with an outer surface 7 and with a bent shape S₂. The shaping tool 3 comprises a first (root) end 15 and a second (tip) end 13. The principal length, i.e. principal longitudinal extension L₂ of the shaping tool 3 extends from the first end 15 to the second end 13. Along that longitudinal extension L₂ the shape S₂ of the rotor blade is bent such that both the first end 15 and the second end 13 are positioned lower than a middle region of the shaping tool 3. Therefore, the shaping tool 3 due to its shape S₂ has an overall larger principal height H₂ than the height of any of its cross-sections.

Fig. 2 shows a corresponding pre-bent rotor blade 1 with an outer surface 5 and a pre-bent shape S₁. The rotor blade 1 extends along its principal longitudinal extension L₁ from a root end 9 to a tip 11. The principal longitudinal extension L₁ is a projection of the rotor blade 1 from root 9 to tip 11 onto a plane on which the rotor blade 1 rests with the root 9 when the root 9 is alinged essentially parallel to the said plane.

As outlined before, the rotor blade 1 has a pre-bent shape S₁. That means that in an outer region O in proximity of the tip 11 the rotor blade 1 is pre-bent upwards so that the rotor blade 1 has an overall larger principal height H₁ than the height of any of its cross-sections. The purpose of the invention is to reduce that overall principal height H₁ in order to facilitate storage and/or transport of the rotor blade 1.

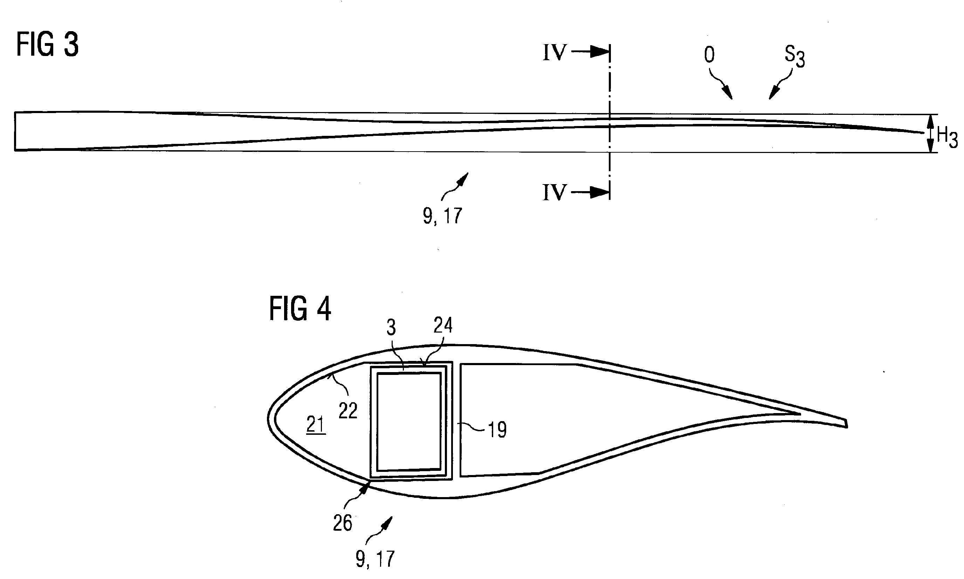

For that purpose, the shaping tool 3 (cf. Fig. 1) is introduced in an introduction direction J into the interior (cf. Fig. 4) of the rotor blade 1. After transport, the shaping tool 3 can be extracted there from by pulling it out in an extraction direction E, i.e. a counter-direction E to the introduction direction J.

Figs 3 and 4 show a blade assembly 17 comprising the rotor blade 1 of Fig. 2 with the shaping tool 3 introduced in its interior 21. The shaping tool 3 is thereby placed deep inside the interior 21 of the rotor blade 1, namely in the outer region O. For the introduction the shaping tool 3 has been guided along a guidance means 19, namely a spar 19 which runs longitudinally in the interior 21 of the rotor blade 1. For the purpose of introduction, the outer surface 7 of the shaping tool 3 has been led along the inner surface 22 of the interior 21 of the rotor blade 1, possibly assisted by more guidance means (not shown) such as a number of rollers and/or a number of dampers. The outer surface 7 of the shaping tool 3 has further been equipped with low-friction material 24 such as nylon in order to facilitate its introduction. The inner surface 22 of the rotor blade 1 comprises a recess 26 which serves to hold the shaping tool 3 in a desired position in the interior 21 of the rotor blade 1. Due to the shape S₂ of the shaping tool the blade assembly 17 shows a new shape S₃ which differs from the pre-bent shape S₁ of the rotor blade 1 in an untensioned state. The new shape S₃ of the blade assembly 17 thus mainly comprises the original shape S₁ of the rotor blade close to its root 9 whereas in the outer region O it is mainly characterized by the shape S₂ of the shaping tool 3 so that the rotor blade 1 is now bent downwards against the direction of its pre-bend. There from results a new, reduced overall height H₃ which is smaller than the overall height H₁ of the rotor blade 1 in its untensioned pre-bent state. This means that it is easier to store and particularly to transport the rotor blade 1 (in the form of the blade assembly 17) as less space is needed in the direction of the overall height H₁/H₃.

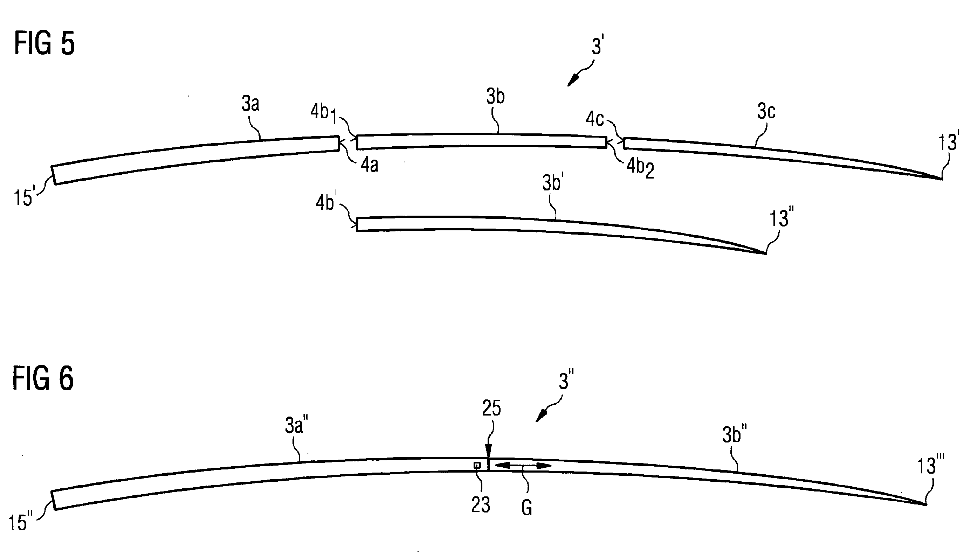

Figs. 5 and 6 show two more embodiments shaping tools 3', 3" according to the invention. Fig. 5 shows a shaping tool 3' which is divided into four parts 3a, 3b, 3c, 3b'. The first part 3a extends from a root end 15' to a first connection interface 4a, the second part 3b extends from a second connection interface 4b₁ to a third connection interface 4b₂, the third part 3c extends from a fourth connection interface 4c to a tip end 13'. The fourth part 3b' extends from a fifth connection interface 4b' to a tip end 13''.

The first part 3a can either be connected via the first connection interface 4a to the second part 3b via the second connection interface 4b₁ of the second part 3b or alternatively via the fifth connection interface 4b' to the fourth part 3b'. Therefore, both the second connection interface 4b₁ and the fifth connection interface 4b' are the same and in particular realized to be connected to the first interface 4a. The third connection interface 4b₂ and the fourth connection interface 4c are also realized to connect to each other. In such constellation, it is possible to connect to the first part 3a either the second part 3b or the fourth part 3b' which two latter have different longitudinal extensions. The second part 3b can further be extended in length by connecting to it the third part 3c. When only combining the first part 3a with the second part 3b the smallest longitudinal extension of the shaping tool 3' in this embodiment is achieved. By combining the first part 3a with the fourth part 3b' a larger longitudinal extension of the shaping tool 3' is achieved and the largest longitudinal extension of the shaping tool 3' is achieved when combining the first part 3a with both the second part 3b and the third part 3c. That means that the shaping tool 3' is adaptable to different (interior) extensions of rotor blades of different sizes by extending and/or reducing its overall longitudinal extension by choosing those additional parts 3b, 3b', 3c which are best suitable to that particular size of rotor blade.

Fig. 6 depicts a third embodiment of a shaping tool 3" which can be used in the context of the invention. The shaping tool 3" comprises a first part 3a" and a second part 3b" which parts 3a", 3b" are interconnected at a connection interface 25. The second part 3b" can be moved to and fro along a principal direction G into and out of the first part 3a". This is achieved by means of an actuator 23 which can be for instance realized as an electric motor and/or as a hydraulic and/or pneumatic actuator which is connected to both parts 3a'', 3b" in such way that it moved the two parts 3a'', 3b" relative to each other, i.e. by introducing a part of the second part 3b" into the inner of the (essentially hollow) first part 3a" or by introducing a part of the first part 3a" into the inner of the (essentially hollow) second part 3b". This way the distance between the root end 15" of the first part 3a" and the tip end 13'" of the second part 3b" can be varied - the shaping tool 3" is again extendable and/or reducible in its overall longitudinal extension.

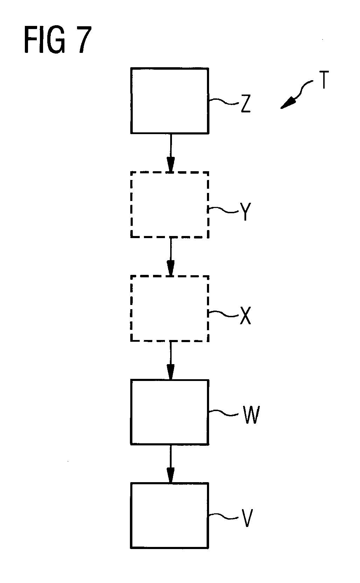

Fig. 7 shows a schematic block view of an embodiment of the method T according to the invention. The only essential step of that method T is step W whereas the other steps may or may not be taken - just as desired in the context of a concrete application of the method T. Reference is made to the preceding figures, however, it is clear that the method T can also be realized with derivations of the shaping tools 3, 3', 3" and other pre-bent rotor blades.

In a first step Z there is provided a pre-bent rotor blade 1. Step Z may be followed by an optional step Y which is an adaption of the extension of a shaping tool 3', 3". It is to be understood that if one uses a shaping tool 3 as the one depicted in Fig. 1 that step Y is omitted - the same applies if an extendable shaping tool 3', 3" already has the desired overall longitudinal extension. In another optional step X the rotor blade 1 is tensioned such that its overall cross-extension H₁ to the overall longitudinal extension is reduced. This can for instance be realized on the outer surface 5 of the rotor blade by tensioning means such as the ones shown in the above-mentioned prior art. Then, in the compulsory step W, the shaping tool 3, 3', 3" is introduced into the interior 21 of the rotor blade 1. During that step W, the shaping tool 3, 3', 3" may also tension the rotor blade 1 to alter its pre-bent shape S₁. This can serve as an alternative to step X. The shaping tool 3, 3', 3" due to its higher stiffness than the rotor blade in the cross-extensional direction H₁/H₂ to the overall longitudinal extension L₁/L₂ keeps the shape S₃ of the rotor blade 1, i.e. of the blade assembly 17. In a step U the blade assembly 17 can be stored and/or transported while being maintained in its adapted shape S₃. This facilitates both storage and/or transport as the overall dimensions of the rotor blade 1 and thus the blade assembly 17 are reduced in comparison with an unstressed or untensioned pre-bent rotor blade 1 as shown in Fig. 2.

Although the present invention has been disclosed in the form of preferred embodiments and variations thereon, it will be understood that numerous additional modifications and variations could be made thereto without departing from the scope of the invention.

For the sake of clarity, it is to be understood that the use of 'a' or 'an' throughout this application does not exclude a plurality, and 'comprising' does not exclude other steps or elements.

## Claims

1. Method (T) of shaping a curved rotor blade (1) for storage and/or transport such that an overall cross-extension (H₁) of the rotor blade (1) is reduced in at least one direction perpendicular to a longitudinal principal extension (L₁) of the rotor blade (1), characterised for comprising the step of introducing (W) a shaping tool (3, 3', 3") into an interior (21) of the rotor blade (1), which shaping tool (3, 3', 3") is preferably stiffer than the rotor blade (1) at least in a direction defined by the cross-extension (H₁) in the at least one direction.

2. Method according to claim 1, whereby first the cross-extension (H₁) of the rotor blade (1) in the at least one direction is reduced by means of a tensioning device which is applied to the rotor blade's (1) outer surface (5) and second the shaping tool (3, 3', 3") is introduced.

3. Method according to claim 1, whereby the introduction (W) of the shaping tool (3, 3', 3") is used to reduce the cross-extension (H₁) in the at least one direction.

4. Method according to any one of the preceding claims, whereby the shaping tool (3, 3', 3") is positioned inside the rotor blade (1) such that it firmly holds the rotor blade (1) such that the reduced cross-extension (H₃) of the rotor blade (1) is maintained by the shaping tool (3, 3', 3").

5. Method according to claim 4, whereby the shaping tool (3, 3', 3") is fixedly positioned in the interior (21) of the rotor blade (1) for storage and/or transport of the rotor blade (1).

6. Method according to claim 5, whereby the rotor blade (1) is equipped with engagement means, preferably with a number of recesses, at an interior surface (22) which engagement means are realized to engage with correspondingly shaped and/or positioned counter-engagement means of the shaping tool (3, 3', 3").

7. Method according to any one of the preceding claims, whereby the introduction (W) of the shaping tool (3, 3', 3") is assisted by means of at least one guidance means (19).

8. Method according to claim 7, whereby the guidance means comprises a spar (19) in the interior (21) of the rotor blade (1).

9. Method according to claim 7 or 8, whereby the guidance means comprises at least one guidance roller and/or at least one damper realized to dampen an impact of the shaping tool (3, 3', 3") on the interior surface (22) of the rotor blade (1) and/or vice versa.

10. Shaping tool (3, 3', 3") for introduction (W) into an interior (21) of a curved rotor blade (1) for storage and/or transport of the rotor blade (1), which shaping tool (3, 3', 3") is preferably stiffer than the rotor blade (1) at least in a direction defined by a cross-extension (H₁) in at least one direction perpendicular to a longitudinal principal extension (L₁) of the rotor blade (1), whereby the shaping tool (3, 3', 3") is realized such that it can be positioned in the interior (21) of the rotor blade (1) such that it firmly holds the rotor blade (1) in a way that a reduced cross-extension (H₃) of the rotor blade (1) in the at least one direction is maintained during storage and/or transport, which reduced cross-extension (H₃) refers to a stressed state of the rotor blade (1) in comparison with its unstressed state.

11. Shaping tool according to claim 10, comprising a core structure comprising a composite fibre material and/or carbon and/or steel.

12. Shaping tool according to claim 10 or 11, comprising an outer surface (7) which is at least partially comprised of a low friction material, preferably a nylon material.

13. Shaping tool according to any one of claims 10 to 12, realized as an extendable shaping tool (3', 3") which is extendable in at least one direction, preferably a designated direction (J) of introduction (W) of the shaping tool into the interior (21) of the rotor blade (1).

14. Shaping tool according to any one of claims 10 to 13, comprising at least one actuator (23), realized to extend the shaping tool and/or to assist its introduction (W) into the interior (21) of the rotor blade (1).

15. Blade assembly (17) comprising a rotor blade (1) with a shaping tool (3, 3', 3") according to any one of claims 10 to 14 introduced in the interior (21) of the rotor blade (1).

## Patentansprüche

1. Verfahren (T) zum derartigen Formen eines gekrümmten Rotorblatts (1) für Lagerung und/oder Transport, dass sich eine Gesamtquerausdehnung (H₁) des Rotorblatts (1) in mindestens einer senkrecht zur Hauptausdehnung in Längsrichtung (L₁) des Rotorblatts (1) verlaufenden Richtung verringert, **dadurch gekennzeichnet, dass** es das Einführen (W) eines Formwerkzeugs (3, 3', 3") in einen Innenraum (21) des Rotorblatts (1) umfasst, wobei das Formwerkzeug (3, 3', 3") vorzugsweise zumindest in einer durch die Querausdehnung (H₁) definierten Richtung in der mindestens einen Richtung steifer ist als das Rotorblatt (1).

2. Verfahren nach Anspruch 1, bei dem zunächst die Querausdehnung (H₁) des Rotorblatts (1) in der mindestens einen Richtung mit Hilfe einer Spannvorrichtung verringert wird, die an die Außenfläche (5) des Rotorblatts (1) angelegt wird, und dann das Formwerkzeug (3, 3', 3") eingeführt wird.

3. Verfahren nach Anspruch 1, bei dem das Einführen (W) des Formwerkzeugs (3, 3', 3") zum Verringern der Querausdehnung (H₁) in der mindestens einen Richtung genutzt wird.

4. Verfahren nach einem der vorhergehenden Ansprüche, bei dem das Formwerkzeug (3, 3', 3") so in dem Rotorblatt (1) positioniert wird, dass es das Rotorblatt (1) so festhält, dass die verringerte Querausdehnung (H₃) des Rotorblatts (1) durch das Formwerkzeug (3, 3', 3") aufrechterhalten wird.

5. Verfahren nach Anspruch 4, bei dem das Formwerkzeug (3, 3', 3") für Lagerung und/oder Transport des Rotorblatts (1) fest in dem Innenraum (21) des Rotorblatts (1) positioniert wird.

6. Verfahren nach Anspruch 5, bei dem das Rotorblatt (1) an einer Innenfläche (22) mit Eingriffmitteln, vorzugsweise mit einer Anzahl Ausnehmungen, ausgestattet ist, die so ausgelegt sind, dass darin entsprechend geformte und/oder positionierte Gegeneingriffmittel des Formwerkzeugs (3, 3', 3") eingreifen.

7. Verfahren nach einem der vorhergehenden Ansprüche, bei dem das Einführen (W) des Formwerkzeugs (3, 3', 3") mit Hilfe mindestens eines Führungsmittels (19) unterstützt wird.

8. Verfahren nach Anspruch 7, bei dem das Führungsmittel einen Holm (19) in dem Innenraum (21) des Rotorblatts (1) umfasst.

9. Verfahren nach Anspruch 7 oder 8, bei dem das Führungsmittel mindestens eine Führungsrolle und/oder mindestens einen Dämpfer zum Dämpfen eines Aufpralls des Formwerkzeugs (3, 3', 3") auf der Innenfläche (22) des Rotorblatts (1) und/oder umgekehrt aufweist.

10. Formwerkzeug (3, 3', 3") zum Einführen (W) in einen Innenraum (21) eines gekrümmten Rotorblatts (1) für Lagerung und/oder Transport des Rotorblatts (1), wobei das Formwerkzeug (3, 3', 3") zumindest in einer durch eine Querausdehnung (H₁) definierten Richtung in mindestens einer senkrecht zu einer Hauptausdehnung in Längsrichtung (L₁) des Rotorblatts (1) verlaufenden Richtung vorzugsweise steifer ist als das Rotorblatt (1), wobei das Formwerkzeug (3, 3', 3") so ausgelegt ist, dass es so in dem Innenraum (21) des Rotorblatts (1) positioniert werden kann, dass es das Rotorblatt (1) auf eine Weise festhält, dass eine verringerte Querausdehnung (H₃) des Rotorblatts (1) in der mindestens einen Richtung bei Lagerung und/oder Transport beibehalten wird, wobei die verringerte Querausdehnung (H₃) im Vergleich zum ungespannten Zustand einen gespannten Zustand des Rotorblatts (1) betrifft.

11. Formwerkzeug nach Anspruch 10 mit einer Kernkonstruktion, die ein Verbundfasermaterial und/oder Kohlenstoff und/oder Stahl umfasst.

12. Formwerkzeug nach Anspruch 10 oder 11 mit einer Außenfläche (7), die zumindest teilweise aus einem reibungsarmen Material, vorzugsweise einem Nylonmaterial, besteht.

13. Formwerkzeug nach einem der Ansprüche 10 bis 12, das als verlängerbares Formwerkzeug (3', 3") ausgelegt ist, welches sich in mindestens einer Richtung, vorzugsweise einer vorgegebenen Richtung (J) des Einführens (W) des Formwerkzeugs in den Innenraum (21) des Rotorblatts (1) verlängern lässt.

14. Formwerkzeug nach einem der Ansprüche 10 bis 13 mit mindestens einem Stellelement (23), das so ausgelegt ist, dass es das Formwerkzeug verlängert und/oder bei dessen Einführen (W) in den Innenraum (21) des Rotorblatts (1) behilflich ist.

15. Blattbaugruppe (17), die ein Rotorblatt (1) mit einem Formwerkzeug (3, 3', 3") nach einem der Ansprüche 10 bis 14 umfasst, das in den Innenraum (21) des Rotorblatts (1) eingeführt ist.

## Revendications

1. Procédé (T) de formage d'une pale (1) de rotor incurvée permettant le stockage et/ou le transport de sorte qu'une extension transversale (H₁) globale de la pale (1) de rotor est réduite dans au moins une direction perpendiculaire à une extension (L₁) principale longitudinale de la pale (1) de rotor, **caractérisé en ce qu**'il comprend l'étape consistant à introduire (W) un outil (3, 3', 3") de formage à l'intérieur (21) de la pale (1) de rotor, cet outil (3, 3', 3") de formage est de préférence plus rigide que la pale (1) de rotor au moins dans une direction définie par l'extension transversale (H₁) dans l'au moins une direction.

2. Procédé selon la revendication 1, dans lequel, en premier lieu, l'extension transversale (H₁) de la pale (1) de rotor dans l'au moins une direction est réduite grâce à un dispositif de tension qui est appliqué à la surface (5) externe de la pale (1) de rotor, et en second lieu, l'outil (3, 3', 3") de formage est introduit.

3. Procédé selon la revendication 1, dans lequel l'introduction (W) de l'outil (3, 3', 3") de formage est utilisée pour réduire l'extension transversale (H₁) dans l'au moins une direction.

4. Procédé selon l'une quelconque des revendications précédentes, dans lequel l'outil (3, 3', 3") de formage est positionné à l'intérieur de la pale (1) de rotor de sorte qu'il maintient fermement la pale (1) de rotor de manière à ce que l'extension transversale (H₃) réduite de la pale (1) de rotor soit maintenue par l'outil (3, 3', 3") de formage.

5. Procédé selon la revendication 4, dans lequel l'outil (3, 3', 3") de formage est positionné de manière fixe à l'intérieur (21) de la pale (1) de rotor pour un stockage et/ou un transport de la pale (1) de rotor.

6. Procédé selon la revendication 5, dans lequel la pale (1) de rotor est équipée de moyens de prise, de préférence avec un certain nombre de renfoncements, au niveau d'une surface (22) intérieure, ces moyens de prise sont effectués pour une mise en prise avec des moyens de contre-prise positionnés et/ou formés de manière correspondante de l'outil (3, 3', 3") de formage.

7. Procédé selon l'une quelconque des revendications précédentes, dans lequel l'introduction (W) de l'outil (3, 3', 3") de formage est assistée au moyen d'au moins un moyen (19) de guidage.

8. Procédé selon la revendication 7, dans lequel le moyen de guidage comprend un longeron (19) à l'intérieur (21) de la pâle (1) de rotor.

9. Procédé selon la revendication 7 ou 8, dans lequel le moyen de guidage comprend au moins un galet de guidage et/ou au moins un amortisseur conçu pour amortir un impact de l'outil (3, 3', 3") de formage sur la surface (22) intérieure de la pale (1) de rotor et/ou vice versa.

10. Outil (3, 3', 3") de formage permettant l'introduction (W) à l'intérieur (21) d'une pale (1) de rotor incurvée permettant le stockage et/ou le transport de la pale (1) de rotor, cet outil (3, 3', 3") de formage est de préférence plus rigide que la pale (1) de rotor au moins dans une direction définie par une extension transversale (H₁) dans au moins une direction perpendiculaire à une extension (L₁) principale longitudinale de la pale (1) de rotor, dans lequel l'outil (3, 3', 3") de formage est conçu de manière à pouvoir être positionné à l'intérieur (21) de la pale (1) de rotor de sorte qu'il maintient fermement la pale (1) de rotor de façon à maintenir une extension (H₃) transversale réduite de la pale (1) de rotor dans l'au moins une direction pendant le stockage et/ou le transport, cette extension transversale (H₃) réduite fait référence à un état contraint de la pale (1) de rotor en comparaison avec son état non contraint.

11. Outil de formage selon la revendication 10, comprenant une structure centrale qui comprend un matériau de fibre composite et/ou du carbone et/ou de l'acier.

12. Outil de formage selon la revendication 10 ou 11, comprenant une surface (7) externe qui est au moins partiellement composée d'un matériau à faible frottement, de préférence un matériau en nylon.

13. Outil de formage selon l'une quelconque des revendications 10 à 12, conçu comme un outil (3', 3") de formage extensible qui est extensible dans au moins une direction, de préférence une direction (J) désignée d'introduction (W) de l'outil de formage à l'intérieur (21) de la pale (1) de rotor.

14. Outil de formage selon l'une quelconque des revendications 10 à 13, comprenant au moins un actionneur (23), conçu pour étendre l'outil de formage et/ou pour assister à son introduction (W) à l'intérieur (21) de la pale (1) de rotor.

15. Ensemble (17) de pales comprenant une pale (1) de rotor pourvue d'un outil (3, 3', 3") de formage selon l'une quelconque des revendications 10 à 14 introduit à l'intérieur (21) de la pale (1) de rotor.
